# EUROPÄISCHE PATENTSCHRIFT

(11) **EP 2 248 219 B1**
(45) Veröffentlichungstag und Bekanntmachung des Hinweises auf die Patenterteilung: **05.09.2012**
(21) Anmeldenummer: 09715130.2
(22) Anmeldetag: 23.01.2009
(51) Int. Cl.: H01M 10/50, F25D 17/04, H01M 2/10, H01M 10/052

(54) **VORRICHTUNG UND VERFAHREN ZUR KÜHLUNG EINES BATTERIEMODULS**
DEVICE AND METHOD FOR COOLING A BATTERY MODULE
DISPOSITIF ET PROCÉDÉ POUR LE REFROIDISSEMENT D'UN MODULE DE BATTERIE

(30) Priorität: 27.02.2008 DE 102008011466
(43) Veröffentlichungstag der Anmeldung: 10.11.2010
(73) Patentinhaber: Robert Bosch GmbH, 70442 Stuttgart (DE)
(72) Erfinder: LEUTHNER, Stephan, 71229 Leonberg (DE); KOHLRAUSCH, Philipp, 70180 Stuttgart (DE)
(86) Internationale Anmeldenummer: PCT/EP2009/050757
(87) Internationale Veröffentlichungsnummer: WO 2009/106393

(56) Entgegenhaltungen:
- JP-A- 5 344 606
- JP-A- 2001 105 843
- US-A- 5 490 572
- US-A1- 2003 080 714
- US-B1- 6 422 027

## Beschreibung

Die Erfindung betrifft ein Batteriemodul, umfassend ein Gehäuse, wenigstens eine in dem Gehäuse angeordnete Batterie, wenigstens eine Einlassöffnung zum Einleiten eines Kühlfluids in das Gehäuse, wenigstens eine Auslassöffnung zum Ausleiten des Kühlfluids aus dem Gehäuse, wobei der wenigstens einen Einlassöffnung mittels eines Verdichters komprimiertes Kühlfluid zuführbar ist. Ferner betrifft die Erfindung ein Batteriemodulsystem und ein Verfahren zum Kühlen wenigstens einer in einem Gehäuse angeordneten Batterie.

### Stand der Technik

Batterien, z. B. Lithiumionenbatterien, versorgen verschiedene Einrichtungen, z. B. Hybridkraftfahrzeuge, elektrisch betriebene Fahrzeuge wie Rollstühle, Fahrräder mit elektrischem Hilfsantrieb, Hubstapler oder Elektrowerkzeuge mit elektrischen Strom. Im Allgemeinen werden mehrere Batterien in einem Gehäuse eingebaut und dadurch ein Batteriemodul gebildet. Batteriemodule haben den Vorteil, dass diese leichter mit einem Kühlfluid gekühlt und höhere elektrische Leistungen durch die Kombination mehrerer Batteriemodule zu einem Batteriemodulsystem einfach realisiert werden können.

Die in einem Gehäuse angeordneten, normalerweise zylinderförmigen Batterien werden mit umgewälzter Luft als Kühlfluid gekühlt. Die Kühlkonzepte sehen hierbei entweder einer reine Längs- bzw. Axialanströmung oder eine reine Quer- oder Radialanströmung der zylinderförmigen Batterien im Gehäuse vor. Die Luft strömt dabei durch Öffnungen oder Bohrungen in das Gehäuse ein und wieder aus. Zur Verbesserung der Kühlung der Batterien, insbesondere bei dicht gepackten Batterien in dem Gehäuse des Batteriemoduls, wird zur Kühlung komprimierte Luft verwendet, weil komprimierte Luft eine höhere Masse je Volumeneinheit aufweist und dadurch die Kühlleistung erhöht wird. In dicht gepackten Batterien kann im Allgemeinen nur mit komprimierter Luft die von den Batterien abgegebene Wärme ausreichend abgeführt werden.

Aus der DE 10 2005 017 057 A1 ist eine Batteriekühlvorrichtung für in einem Gehäuse angeordnete Batterieeinheiten bekannt. Eine Pumpe komprimiert und fördert durch einen Druckkanal Luft zu den Batterieeinheiten, um die die Batterieeinheiten in dem Gehäuse zu kühlen. Die Luft wird jedoch durch das Komprimieren erwärmt, so dass dadurch nachteiligerweise die Kühlleistung reduziert wird.

Aus der US 6 422 027 B1 ist eine Batteriekühlvorrichtung für in einem Gehäuse angeordnete Batterieeinheiten bekannt. Die Luft wird jedoch ebenfalls durch das Komprimieren erwärmt, so dass dadurch nachteiligerweise die Kühlleistung reduziert wird.

### Aufgabe

Die Aufgabe der vorliegenden Erfindung besteht deshalb darin, ein Batteriemodul, ein Batteriemodulsystem und ein Verfahren zum Kühlen wenigstens einer in einem Gehäuse angeordneten Batterie zur Verfügung zu stellen, welches eine Verminderung der Kühlleistung aufgrund der Erwärmung des komprimierten Kühlfluids wenigstens teilweise vermeidet. Des Weiteren soll der konstruktive Aufwand gering und das Batteriemodul in der Herstellung preiswert sein.

### Offenbarung der Erfindung

Diese Aufgabe wird gelöst mit einem Batteriemodul, umfassend ein Gehäuse, wenigstens eine in dem Gehäuse angeordnete Batterie, wenigstens eine Einlassöffnung zum Einleiten eines Kühlfluids in das Gehäuse, wenigstens eine Auslassöffnung zum Ausleiten des Kühlfluids aus dem Gehäuse, wobei der wenigstens einen Einlassöffnung mittels eines Verdichters komprimiertes Kühlfluid zuführbar ist und das Kühlfluid von einer Kühleinrichtung kühlbar ist und das Batteriemodul ein Entspannungsorgan zum Expandieren des aus der wenigstens einen Auslassöffnung ausgeleiteten Kühlfluids umfasst.

Kühlflüidleitungen und Gehäuse geben an die Umgebung Wärme ab, sofern die Temperatur der Kühlfluidleitung und des Gehäuses höher ist als die Temperatur der Umgebung. Unter Kühleinrichtungen werden Vorrichtungen verstanden, welche die Kühlleistung der Kühlfluidleitung und/oder des Gehäuses über das ohnehin vorhanden Maß erhöhen, z. B. besondere Beschichtungen an der Oberfläche der Kühlfluidleitung, welche die Wärmeabgabe erhöhen oder Kühlrippen, welche die Oberfläche zur Wärmeabgabe vergrößern. Das Kühlfluid kann auch vor dem Verdichten gekühlt werden. Ist das Kühlfluid beispielsweise Luft kann mittels einer Kältemaschine die Luft unterhalb der Temperatur der Umgebungsluft gekühlt und erst anschließend im Verdichter komprimiert werden.

In einer weiteren Ausgestaltung ist das von dem Verdichter komprimierte Kühlfuid kühlbar.

Zweckmäßig ist das Kühlfluid von der Kühleinrichtung vor dem Einleiten des Kühlfluides in das Gehäuse kühlbar.

In einer zusätzlichen Ausführungsform ist das Kühlfluid in einer von dem Verdichter zu der wenigstens einen Einlassöffnung führenden Kühlfluidleitung mittels der Kühleinrichtung kühlbar.

In einer ergänzenden Ausgestaltung ist die Kühleinrichtung wenigstens eine Kühlrippe.

Insbesondere ist die wenigstens eine Kühlrippe an der Kühlfluidleitung angeordnet.

In einer zusätzlichen Ausführungsform ist mittels eines Gebläses Umgebungsluft zu der wenigstens einen Kühlrippe und/oder zu der Kühlfluidleitung leitbar, um das Kühlfluid in der Kühlfluidleitung zu kühlen. Durch das aktive Leiten von Umgebungsluft kann die Kühlleistung der Kühlfluidleitung und/oder der wenigstens einen Kühlrippe erhöht werden.

Vorzugsweise ist die Kühleinrichtung eine Kältemaschine. Es handelt sich insbesondere um eine Kompressionskältemaschine einer Klimaanlage eines Kraftfahrzeuges, welche wenigstens teilweise genutzt wird, um das Kühlfluid zu kühlen.

In einer weiteren Ausführungsform ist ein Wärmetauscher, insbesondere ein Verdampfer, der Kältemaschine an und/oder in der, insbesondere von dem Verdichter zu der wenigstens einen Einlassöffnung führenden, Kühlfluidleitung angeordnet. Der Wärmetauscher kann auch an und/oder in der zu dem Verdichter führenden Kühlfluidleitung angeordnet sein.

In einer zusätzlichen Ausgestaltung ist das von dem Verdichter komprimierte Kühlfluid von dem aus dem Entspannungsorgan austretenden Kühlfluid mittels eines Wärmetauschers kühlbar.

Zweckmäßig ist der Wärmetauscher an und/oder in der von dem Verdichter zu der wenigstens einen Einlassöffnung führenden Kühlfluidleitung angeordnet.

In einer weiteren Ausgestaltung ist dem Batteriemodul eine Regeleinheit zugeordnet, welche den Druck in dem Gehäuse und/oder die Temperatur der wenigstens einen Batterie steuert und/oder regelt.

Insbesondere ist die wenigstens eine Batterie eine Lithiumionenbatterie und/oder das Kühlfluid ein Gas, insbesondere Luft.

Ein erfindungsgemäßes Batteriemodulsystem umfasst wenigstens ein oben beschriebenes Batteriemodul.

Ein erfindungsgemäßes Verfahren zum Kühlen wenigstens einer in einem Gehäuse angeordneten Batterie umfasst die Schritte Verdichten eines Kühlfluides, Einleiten des verdichteten Kühlfluides in das Gehäuse, Kühlen der wenigstens einen Batterie mit dem verdichteten Kühlfluid, Ausleiten des verdichteten Kühlfluides aus dem Gehäuse und Entspannen des Kühlfluides, wobei das Kühlfluid gekühlt wird.

Insbesondere wird das verdichtete Kühlfluid gekühlt. Das Kühlen des verdichteten Kühlfluids hat den Vorteil, dass das verdichtete Kühlfluid eine höhere Temperatur aufweist als das nicht verdichtete Kühlfluid, so dass der notwendig technische Aufwand und/oder der Energiebedarf geringer ist.

In einer weiteren Ausgestaltung wird das, vorzugsweise verdichtete, Kühlfluid dahingehend gekühlt, dass die Kühlleistung zusätzlich mittels einer Kühleinrichtung zu der ohnehin bei Kühlfluidleitungen und/oder Gehäusen vorhandenen Kühlwirkung erhöht wird. Kühlfluidleitungen und/oder Gehäuse geben Wärme an die Umgebung, z. B. mittels Wärmestrahlung oder Konvektion, ab. Diese "normale" Kühlwirkung ist nicht ausreichend, so dass mittels einer Kühleinrichtung die Kühlung des Kühlfluids deutlich erhöht wird.

In einer zusätzlichen Ausgestaltung wird das Kühlfluid vor dem Einleiten in das Gehäuse gekühlt.

In einer ergänzenden Ausführungsform wird das Kühlfluid in einer Kühlfluidleitung von einem Verdichter zu dem Gehäuse geleitet und in der Kühlfluidleitung gekühlt.

Vorzugsweise wird das Kühlfluid von Kühlrippen und/oder von einer Kältemaschine, z. B. einer Kompressions- oder Adsorptionskältemaschine, gekühlt.

In einer weiteren Ausgestaltung wird mittels einer Regeleinheit der Druck in dem Gehäuse und/oder die Temperatur der wenigstens einen Batterie gesteuert und/oder geregelt.

In einer zusätzlichen Ausführungsform steuert und/oder regelt die Regeleinheit den Druck in dem Gehäuse und/oder die Temperatur der wenigstens einen Batterie in Abhängigkeit von dem Innendruck in der wenigstens einen Batterie und/oder der Temperatur des von dem Verdichter angesaugten Kühlfluids und/oder der Temperatur des in das Gehäuse eingeleiteten komprimierten Kühlfluids und/oder der Temperatur des aus dem Gehäuse ausgeleiteten Kühlfluids und/oder der Temperatur des Kühlfluids nach dem Expandieren in dem Entspannungsorgan.

Die Erfindung umfasst ferner ein Computerprogramm mit Programmcodemitteln, die auf einem computerlesbaren Datenträger gespeichert sind, um ein oben beschriebenes Verfahren durchzuführen, wenn das Computerprogramm auf einem Computer oder einer entsprechenden Recheneinheit durchgeführt wird.

Des Weiteren umfasst die Erfindung ein Computerprogrammprodukt mit Programmcodemitteln, die auf einem computerlesbaren Datenträger gespeichert sind, um ein oben beschriebenes Verfahren durchzuführen, wenn das Computerprogramm auf einem Computer oder einer entsprechenden Recheneinheit durchgeführt wird.

Im Nachfolgenden werden drei Ausführungsbeispiel der Erfindung unter Bezugnahme auf die beigefügten Zeichnungen näher beschrieben. Es zeigt:
- Fig. 1: einen schematischen Längsschnitt eines Batteriemoduls in einem ersten Ausführungsbeispiel mit Kühlrippen zum Kühlen der komprimierten Luft,
- Fig. 2: einen schematischen Längsschnitt des Batteriemoduls in einem zweiten Ausführungsbeispiel mit einer Kältemaschine zum Kühlen der komprimierten Luft,
- Fig. 3: einen schematischen Längsschnitt des Batteriemoduls in einem dritten Ausführungsbeispiel mit einem Wärmetauscher zum Kühlen der komprimierten Luft mittels der entspannten Kühlluft und
- Fig. 4: einen schematisieren Längsschnitt eines Batteriemodulsystems.

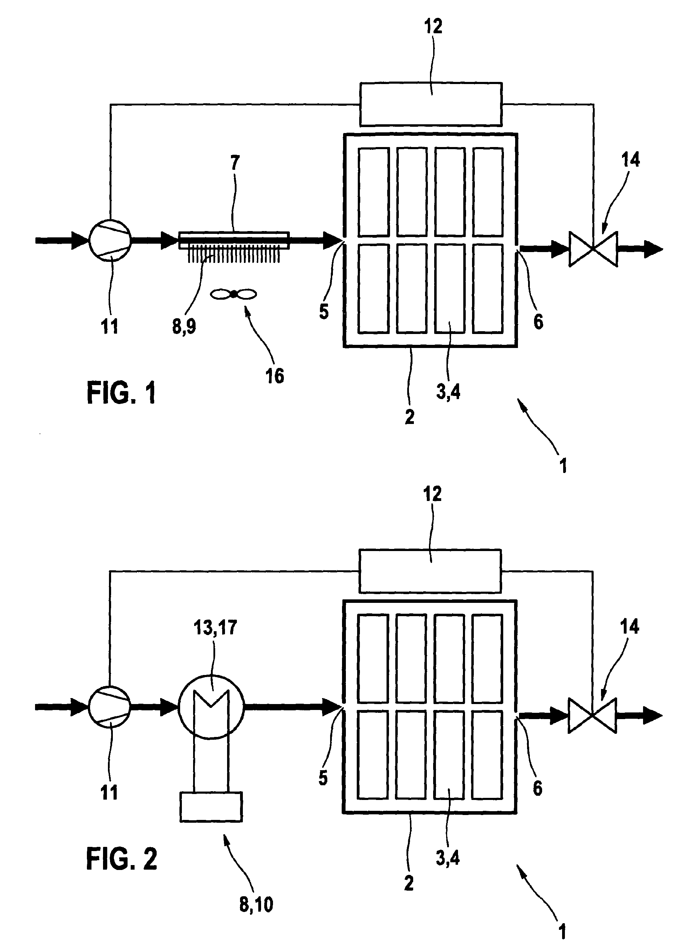

In Figur 1 ist ein erfindungsgemäßes Batteriemodul 1 mit einem Gehäuse 2 zur Aufnahme von acht als Lithiumionenbatterien 4 ausgebildeten Batterien 3 in einem stark schematisierten Querschnitt dargestellt. Das Batteriemodul 1 wird vorzugsweise in Kraftfahrzeugen, insbesondere in Hybridkraftfahrzeugen (nicht dargestellt), eingesetzt. Als Kühlfluid wird Luft eingesetzt, welche von einem Verdichter 11 angesaugt und komprimiert, anschließend durch eine Kühlfluidleitung 7 geleitet und durch eine Einlassöffnung 5 in das Gehäuse 2 mit den Batterien 3 eingeleitet wird. Die komprimierte Luft nimmt von dem in dem Gehäuse 2 angeordneten Batterien 3 Wärme auf und wird anschließend durch eine Auslassöffnung 6 aus dem Gehäuse 2 zu einem Entspannungsorgan 14 geleitet. In dem Entspannungsorgan 14 wird die komprimiere Luft wieder auf normalen Luftdruck im Bereich von 1000 mbar entspannt. Der von dem Verdichter 11, z. B. einem Gebläse oder Kompressor, erzeugte Druck liegt beispielsweise im Bereich von 100 bis 3000 mbar über dem normalen Luftdruck.

Eine Regeleinheit 12 steuert und/oder regelt den Druck in dem Gehäuse 2. Mittels nicht dargestellter Sensoren erhält die Regeleinheit 12 Daten zum Innendruck in den Batterien 3 und dem Gehäuse 2, zu der Temperatur in der wenigstens einen Batterie 3, der Temperatur der Umgebungsluft, der Temperatur der in das Gehäuse 2 eingeleiteten komprimierten Luft, der Temperatur der aus dem Gehäuse 2 ausgeleiteten Luft und der Temperatur der Luft nach dem Expandieren in dem Entspannungsorgan 14. Die notwendige Kühlleistung wird von der Regeleinheit 12 aufgrund der von den Sensoren gemessenen Daten ermittelt; hierzu sind beispielsweise in der Regeleinheit 12 entsprechende Funktionen und/oder Datenbanken hinterlegt. Der Druck wird in Abhängigkeit von dem Innendruck in den Batterien 3 und/oder von der erforderlichen Kühlleistung und/oder der Temperatur der Umgebungsluft eingestellt. Das Einstellen des Druckes in dem Gehäuse 2 in Abhängigkeit von dem Innendruck in den Batterien 3 dient dazu, Verformungen der Batterien 3 und daraus resultierende Undichtigkeiten zu vermeiden. Vorzugsweise ist der Druck in dem Gehäuse 2 größer als der Innendruck in den Batterien 3. Dadurch kann der für die Kompression der Luft notwendige Energieaufwand minimiert bzw. optimiert werden.

An der Kühlfluidleitung 7, welche die Luft von dem Verdichter 11 in das Gehäuse 2 leitet, sind Kühlrippen 9 angebracht. Die Kühlrippen 9 dienen als Kühleinrichtung 8 und kühlen die durch die Kühlfluidleitung 7 geleitete komprimierte Luft ab, indem die Wärme an die Umgebung abgegeben wird. Ergänzend kann mit einem Gebläse 16 auch aktiv Umgebungsluft zu den Kühlrippen 9 bzw. der Kühlfluidleitung 7 geleitet werden, um die Kühlleistung der Kühlrippen 9 weiter zu erhöhen. Das Gebläse 16 kann auch mit der Regeleinheit 12 verbunden sein, so dass die Regeleinheit 12 das Gebläse in Abhängigkeit von der notwendigen Kühlleistung steuert und/oder regelt, um den für das Gebläse 16 notwendigen Energieaufwand zu minimieren.

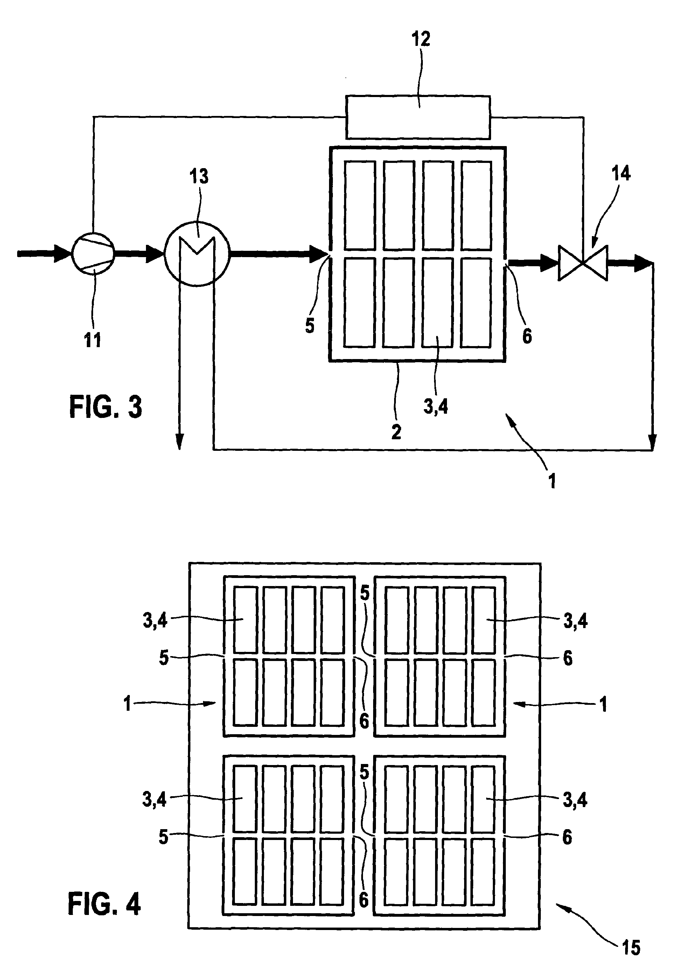

In den Fig. 2 und 3 sind ein zweites und drittes Ausführungsbeispiel des Batteriemoduls 1 beschrieben. Im Nachfolgenden werden nur die Unterschiede des zweiten und dritten Ausführungsbeispiels zu dem ersten Ausführungsbeispiel beschrieben.

In dem in Fig. 2 dargestellten zweiten Ausführungsbeispiel wird mittels einer Kältemaschine 10, insbesondere einer Kompressionskältemaschine einer Klimaanlage eines Kraftfahrzeuges, als Kühleinrichtung 8 die von dem Verdichter 11 komprimierte Luft vor dem Einleiten in das Gehäuse 2 gekühlt. Hierzu ist der Verdampfer 17 der Kompressionskältemaschine an der Kühlfluidleitung 7 angebracht (nicht dargestellt), d. h. es handelt sich um einen Wärmetauscher 13, welcher die Wärme aus der Luft an das Kältemittel der Kältemaschine 10 abgibt. Die Kältemaschine 10 ist vorzugsweise mit der Regeleinheit 12 verbunden (nicht dargestellt), so dass die Regeleinheit 12 die Kältemaschine 10 in Abhängigkeit von der notwendigen Kühlleistung steuert und/oder regelt, um den für die Kältemaschine 10 notwendigen Energieaufwand zu minimieren. Dabei kann dies dahingehend erfolgen, dass mittels eines Ventils nur der notwendige Teil des in einer Kältemittelleitung geleiteten Kältemittels zu dem Verdampfer 17 an der Kühlfluidleitung 7 geleitet wird (nicht dargestellt).

Das in Fig. 3 dargestellte dritte Ausführungsbeispiel verwendet zum Kühlen der komprimierten Luft in der Kühlfluidleitung 7 die nach dem Entspannungsorgan 14 entspannte und damit abgekühlte Luft. Hierzu wird die entspannte Luft zu einem an der Kühlfluidleitung 7 angeordneten Wärmeaustauscher 13 geleitet und kann damit die durch die Kühlfluidleitung 7 geleitete komprimierte Luft abkühlen. In der Kühlfluidleitung 7 (nicht dargestellt) zum Leiten der entspannten Luft zu dem Wärmeaustauscher 13 ist ein nicht dargestelltes Ventil angeordnet, um die Menge der zu dem Wärmeaustauscher 13 geleiteten entspannten Luft zu steuern und/oder zu regeln. Das Ventil ist mit der Regeleinheit 12 verbunden, so dass die Regeleinheit 12 das Ventil in Abhängigkeit von der notwendigen Kühlleistung steuert und/oder regelt. Die in dem dritten Ausführungsbeispiel dargestellte Kühleinrichtung 8 setzt voraus, dass die Temperatur des entspannten Kühlfluids kleiner ist als die Temperatur des komprimierten Kühlfluids vor dem Einleiten in das Gehäuse 2. Mittels entsprechender Temperatursensoren (nicht dargestellt) werden diese beiden Temperaturen gemessen und von der Regeleinheit 12 nur bei einer ausreichenden Temperaturdifferenz das Ventil geöffnet.

Mehrere Batteriemodule 1 können auch zu einem erfindungsgemäßen Batteriemodulsystem 15 verbunden werden (Fig. 4). Die Einlass- und Auslassöffnungen 5, 6 der einzelnen Batteriemodule 1 werden zu einem zentralen Verdichter 11 parallel geschaltet (nicht dargestellt). In einem Batteriemodulsystem 15, beispielsweise für ein Personen- oder Nutzfahrzeug, mit 4 Batteriemodulen 1 (nicht dargestellt) mit je 8 Lithiumionenbatterien 4 befinden sich somit 32 Lithiumionenbatterien 4. Der modulare Aufbau gestattet damit eine bessere Skalierbarkeit, weil mit den identischen Batteriemodulen 1 unterschiedliche elektrische Leistungen für verschiedene Anwendungen einfach realisiert werden können.

Die Einzelheiten der verschiedenen Ausführungsbeispiele sind miteinander kombinierbar, sofern nichts Gegenteiliges erwähnt wird.

Insgesamt betrachtet wird mit dem erfindungsgemäßen Batteriemodul 1 die Kühlleistung wesentlich verbessert. In Batteriemodulen 1 für Kraftfahrzeuge ist es häufig notwendig, die Batterien 3 sehr kompakt in einem geringen Abstand zueinander anzuordnen, um für eine erforderliche Volumeneinheit des Batteriemoduls 1 eine möglichst große elektrische Leistung realisieren zu können. Bei der Verwendung von Lithiumionenbatterien 4 soll die Temperatur der Lithiuminenbatterien 4 nicht höher als 60° C liegen und die Temperaturdifferenz zwischen den Lithiumionenbatterien 4 weniger als 4 K betragen. Zur Kühlung dieser dicht gepackten Batterien 3 ist es im Allgemeinen erforderlich, die Luft zum Kühlen zu komprimieren, um die Wärme ausreichend ableiten zu können. Beim Verdichten erwärmt sich jedoch die eingesetzte Luft als Kühlfluid, so dass die zur Kühlung genutzte komprimierte Luft eine höhere Temperatur aufweist und somit nur eine geringe Kühlleistung erbringen kann. Das Kühlen der komprimierten Luft verhindert diesen nachteiligen Effekt, so dass mit einfachen Mitteln die Kühlleistung wesentlich verbessert und damit auch die Lebensdauer der Batterien 3 verlängert werden kann.

## Patentansprüche

1. Batteriemodul (1), umfassend ein Gehäuse (2), wenigstens eine in dem Gehäuse (2) angeordnete Batterie (3), wenigstens eine Einlassöffnung (5) zum Einleiten eines Kühlfluids in das Gehäuse (2), wenigstens eine Auslassöffnung (6) zum Ausleiten des Kühlfluids aus dem Gehäuse (2), wobei der wenigstens einen Einlassöffnung (5) mittels eines Verdichters (11) komprimiertes Kühlfluid zuführbar ist, wobei das Kühlfluid von einer Kühleinrichtung (8) kühlbar ist, **dadurch gekennzeichnet, dass**
das Batteriemodul (1) ein Entspannungsorgan (14) zum Expandieren des aus der wenigstens einen Auslassöffnung (6) ausgeleiteten Kühlfluids umfasst.

2. Batteriemodul nach Anspruch 1,
**dadurch gekennzeichnet, dass**
das von dem Verdichter (11) komprimierte Kühlfuid kühlbar ist.

3. Batteriemodul nach Anspruch 1 oder 2,
**dadurch gekennzeichnet, dass**
das Kühlfluid von der Kühleinrichtung (8) vor dem Einleiten des Kühlfluides in das Gehäuse (2) kühlbar ist.

4. Batteriemodul nach einem oder mehreren der vorhergehenden Ansprüche,
**dadurch gekennzeichnet, dass**
das Kühlfluid in einer von dem Verdichter (11) zu der wenigstens einen Einlassöffnung (5) führenden Kühlfluidleitung (7) mittels der Kühleinrichtung (8) kühlbar ist.

5. Batteriemodul nach einem oder mehreren der vorhergehenden Ansprüche,
**dadurch gekennzeichnet, dass**
die Kühleinrichtung (8) wenigstens eine Kühlrippe (9) ist.

6. Batteriemodul nach Anspruch 5,
**dadurch gekennzeichnet, dass**
die wenigstens eine Kühlrippe (9) an der Kühlfluidleitung (7) angeordnet ist.

7. Batteriemodul nach Anspruch 4, 5 oder 6,
**dadurch gekennzeichnet, dass**
mittels eines Gebläses (16) Umgebungsluft zu der wenigstens einen Kühlrippe (9) und/oder zu der Kühlfluidleitung (7) leitbar ist, um das Kühlfluid in der Kühlfluidleitung (7) zu kühlen.

8. Batteriemodul nach einem oder mehreren der vorhergehenden Ansprüche,
**dadurch gekennzeichnet, dass**
die Kühleinrichtung (8) eine Kältemaschine (10) ist.

9. Batteriemodul nach Anspruch 8,
**dadurch gekennzeichnet, dass**
ein Wärmetauscher (13), insbesondere ein Verdampfer (17), der Kältemaschine (10) an und/oder in der, insbesondere von dem Verdichter (11) zu der wenigstens einen Einlassöffnung (5) führenden, Kühlfluidleitung (7) angeordnet ist.

10. Batteriemodul nach einem oder mehreren der vorhergehenden Ansprüche,
**dadurch gekennzeichnet, dass**
das von dem Verdichter (11) komprimierte Kühlfluid von dem aus dem Entspannungsorgan (14) austretenden Kühlfluid mittels eines Wärmetauschers (13) kühlbar ist.

11. Batteriemodul nach Anspruch 9 oder 10,
**dadurch gekennzeichnet, dass**
der Wärmetauscher (13) an und/oder in der von dem Verdichter (11) zu der wenigstens einen Einlassöffnung (5) führenden Kühlfluidleitung (7) angeordnet ist.

12. Batteriemodul nach einem oder mehreren der vorhergehenden Ansprüche,
**dadurch gekennzeichnet, dass**
dem Batteriemodul (1) eine Regeleinheit (12) zugordnet ist, welche den Druck in dem Gehäuse (2) und/oder die Temperatur der wenigstens einen Batterie (3) steuert und/oder regelt.

13. Batteriemodul nach einem oder mehreren der vorhergehenden Ansprüche,
**dadurch gekennzeichnet, dass**
die wenigstens eine Batterie (3) eine Lithiumionenbatterie (4) und/oder das Kühlfluid ein Gas, insbesondere Luft, ist.

14. Batteriemodulsystem (15) mit mehreren Batteriemodulen (1),
**dadurch gekennzeichnet, dass**
das Batteriemodulsystem (15) wenigstens ein Batteriemodul (1) nach einem oder mehreren der vorhergehenden Ansprüche umfasst.

15. Verfahren zum Kühlen wenigstens einer in einem Gehäuse (2) angeordneten Batterie (3) mit den Schritten
- Verdichten eines Kühlfluides,
- Einleiten des verdichteten Kühlfluides in das Gehäuse (2),
- Kühlen der wenigstens einen Batterie (3) mit dem verdichteten Kühlfluid,
- Ausleiten des verdichteten Kühlfluides aus dem Gehäuse (2) und
- Entspannen des Kühlfluides,
**dadurch gekennzeichnet, dass**
das Kühlfluid gekühlt wird.

16. Verfahren nach Anspruch 15,
**dadurch gekennzeichnet, dass**
das verdichtete Kühlfluid gekühlt wird.

17. Verfahren nach Anspruch 15 oder 16,
**dadurch gekennzeichnet, dass**
das, vorzugsweise verdichtete, Kühlfluid dahingehend gekühlt wird, dass die Kühlleistung zusätzlich mittels einer Kühleinrichtung (8) zu der ohnehin bei Kühlfluidleitungen (7) und/oder Gehäusen (2) vorhandenen Kühlwirkung erhöht wird.

18. Verfahren nach einem oder mehreren der Ansprüche 15 bis 17,
**dadurch gekennzeichnet, dass**
das Kühlfluid vor dem Einleiten in das Gehäuse (2) gekühlt wird.

19. Verfahren nach einem oder mehreren der Ansprüche 15 bis 18,
**dadurch gekennzeichnet, dass**
das Kühlfluid in einer Kühlfluidleitung (7) von einem Verdichter (11) zu dem Gehäuse (2) geleitet wird und in der Kühlfluidleitung (7) gekühlt wird.

20. Verfahren nach einem oder mehreren der Ansprüche 15 bis 19,
**dadurch gekennzeichnet, dass**
das Kühlfluid von Kühlrippen (9) und/oder von einer Kältemaschine (10) gekühlt wird.

21. Verfahren nach einem oder mehreren der Ansprüche 15 bis 20,
**dadurch gekennzeichnet, dass**
mittels einer Regeleinheit (12) der Druck in dem Gehäuse (2) und/oder die Temperatur der wenigstens einen Batterie (3) gesteuert und/oder geregelt wird.

22. Verfahren nach Anspruch 21,
**dadurch gekennzeichnet, dass**
die Regeleinheit (12) den Druck in dem Gehäuse (2) und/oder die Temperatur der wenigstens einen Batterie (3) in Abhängigkeit von dem Innendruck in der wenigstens einen Batterie (3) und/oder der Temperatur des von dem Verdichter (11) angesaugten Kühlfluids und/oder der Temperatur des in das Gehäuse (2) eingeleiteten komprimierten Kühlfluids und/oder der Temperatur des aus dem Gehäuse (2) ausgeleiteten Kühlfluids und/oder der Temperatur des Kühlfluids nach dem Expandieren in dem Entspannungsorgan (14) steuert und/oder regelt.

23. Computerprogramm mit Programmcodemitteln, die auf einem computerlesbaren Datenträger gespeichert sind, um ein Verfahren nach einem oder mehreren der Ansprüche 15 bis 22 durchzuführen, wenn das Computerprogramm auf einem Computer oder einer entsprechenden Recheneinheit durchgeführt wird.

## Claims

1. Battery module (1), comprising a housing (2), at least one battery (3) arranged in the housing (2), at least one inlet port (5) for introducing a cooling fluid into the housing (2), and at least one outlet port (6) for discharging the cooling fluid out of the housing (2), the at least one inlet port (5) being capable of being supplied with compressed cooling fluid by means of a compressor (11), the cooling fluid being coolable by a cooling device (8), **characterized in that** the battery module (1) comprises an expansion member (14) for expanding the cooling fluid discharged out of the at least one outlet port (6).

2. Battery module according to Claim 1, **characterized in that** the cooling fluid compressed by the compressor (11) is coolable.

3. Battery module according to Claim 1 or 2, **characterized in that** the cooling fluid is coolable by the cooling device (8) before the cooling fluid is introduced into the housing (2).

4. Battery module according to one or more of the preceding claims, **characterized in that** the cooling fluid is coolable by means of the cooling device (8) in a cooling-fluid line (7) leading from the compressor (11) to the at least one inlet port (5).

5. Battery module according to one or more of the preceding claims, **characterized in that** the cooling device (8) is at least one cooling rib (9).

6. Battery module according to Claim 5, **characterized in that** the at least one cooling rib (9) is arranged on the cooling-fluid line (7).

7. Battery module according to Claim 4, 5 or 6, **characterized in that** ambient air is conductible to the at least one cooling rib (9) and/or to the cooling-fluid line (7) by means of a blower (16), in order to cool the cooling fluid in the cooling-fluid line (7).

8. Battery module according to one or more of the preceding claims, **characterized in that** the cooling device (8) is a refrigerating machine (10).

9. Battery module according to Claim 8, **characterized in that** the heat exchanger (13), in particular an evaporator (17), of the refrigerating machine (10) is arranged on and/or in the cooling-fluid line (7) leading, in particular, from the compressor (11) to the at least one inlet port (5).

10. Battery module according to one or more of the preceding claims, **characterized in that** the cooling fluid compressed by the compressor (11) is coolable by means of a heat exchanger (13) by the cooling fluid emerging from the expansion member (14).

11. Battery module according to Claim 9 or 10, **characterized in that** the heat exchanger (13) is arranged on and/or in the cooling-fluid line (7) leading from the compressor (11) to the at least one inlet port (5).

12. Battery module according to one or more of the preceding claims, **characterized in that** the battery module (1) is assigned a regulating unit (12) which controls and/or regulates the pressure in the housing (2) and/or the temperature of the at least one battery (3).

13. Battery module according to one or more of the preceding claims, **characterized in that** the at least one battery (3) is a lithium-ion battery (4) and/or the cooling fluid is a gas, in particular air.

14. Battery module system (15) having a plurality of battery modules (1), **characterized in that** the battery module system (15) comprises at least one battery module (1) according to one or more of the preceding claims.

15. Method for cooling at least one battery (3) arranged in a housing (2), with the steps
- compression of a cooling fluid,
- introduction of the compressed cooling fluid into the housing (2),
- cooling of the at least one battery (3) by means of the compressed cooling fluid,
- discharge of the compressed cooling fluid out of the housing (2), and
- expansion of the cooling fluid,
**characterized in that** the cooling fluid is cooled.

16. Method according to Claim 15, **characterized in that** the compressed cooling fluid is cooled.

17. Method according to Claim 15 or 16, **characterized in that** the preferably compressed cooling fluid is cooled to the effect that by means of a cooling device (8) the cooling capacity is increased in addition to the cooling action present in any case in cooling-fluid lines (7) and/or housings (2).

18. Method according to one or more of Claims 15 to 17, **characterized in that** the cooling fluid is cooled before being introduced into the housing (2).

19. Method according to one or more of Claims 15 to 18, **characterized in that** the cooling fluid is conducted from a compressor (11) to the housing (2) in a cooling-fluid line (7) and is cooled in the cooling-fluid line (7).

20. Method according to one or more of Claims 15 to 19, **characterized in that** the cooling fluid is cooled by cooling ribs (9) and/or by a refrigerating machine (10).

21. Method according to one or more of Claims 15 to 20, **characterized in that** the pressure in the housing (2) and/or the temperature of the at least one battery (3) is controlled and/or regulated by means of a regulating unit (12).

22. Method according to Claim 21, **characterized in that** the regulating unit (12) controls and/or regulates the pressure in the housing (2) and/or the temperature of the at least one battery (3) as a function of the internal pressure in the at least one battery (3) and/or of the temperature of the cooling fluid sucked in by the compressor (11) and/or of the temperature of the compressed cooling fluid introduced into the housing (2) and/or of the temperature of the cooling fluid discharged out of the housing (2) and/or of the temperature of the cooling fluid after expansion in the expansion member (14).

23. Computer program with program code means which are stored on a computer-readable data carrier, in order to carry out a method according to one or more of Claims 15 to 22 when the computer program is carried out on a computer or a corresponding computing unit.

## Revendications

1. Module de batterie (1), comportant un boîtier (2), au moins une batterie (3) disposée dans le boîtier (2), au moins une ouverture d'admission (5) pour introduire un fluide de refroidissement dans le boîtier (2), au moins une ouverture de sortie (6) pour évacuer le fluide de refroidissement hors du boîtier (2), du fluide de refroidissement comprimé au moyen d'un compresseur (11) pouvant être acheminé à l'au moins une ouverture d'admission (5), le fluide de refroidissement pouvant être refroidi par un dispositif de refroidissement (8),
**caractérisé en ce que**
le module de batterie (1) comporte un organe de détente (14) pour détendre le fluide de refroidissement évacué hors de l'au moins une ouverture de sortie (6).

2. Module de batterie selon la revendication 1,
**caractérisé en ce que**
le fluide de refroidissement comprimé par le compresseur (11) peut être refroidi.

3. Module de batterie selon la revendication 1 ou 2,
**caractérisé en ce que**
le fluide de refroidissement peut être refroidi par le dispositif de refroidissement (8) avant l'introduction du fluide de refroidissement dans le boîtier (2).

4. Module de batterie selon l'une quelconque ou plusieurs des revendications précédentes,
**caractérisé en ce que**
le fluide de refroidissement peut être refroidi au moyen du dispositif de refroidissement (8) dans une conduite de fluide de refroidissement (7) menant du compresseur (11) jusqu'à l'au moins une ouverture d'admission (5).

5. Module de batterie selon l'une quelconque ou plusieurs des revendications précédentes,
**caractérisé en ce que**
le dispositif de refroidissement (8) est au moins une ailette de refroidissement (9).

6. Module de batterie selon la revendication 5,
**caractérisé en ce que**
l'au moins une ailette de refroidissement (9) est disposée sur la conduite de fluide de refroidissement (7).

7. Module de batterie selon la revendication 4, 5 ou 6,
**caractérisé en ce que**
de l'air ambiant peut être guidé au moyen d'un ventilateur (16) jusqu'à l'au moins une ailette de refroidissement (9) et/ou jusqu'à la conduite de fluide de refroidissement (7), afin de refroidir le fluide de refroidissement dans la conduite de fluide de refroidissement (7).

8. Module de batterie selon l'une quelconque ou plusieurs des revendications précédentes,
**caractérisé en ce que**
le dispositif de refroidissement (8) est une machine frigorifique (10).

9. Module de batterie selon la revendication 8,
**caractérisé en ce**
**qu'**un échangeur de chaleur (13), en particulier un évaporateur (17), de la machine frigorifique (10) est disposé sur et/ou dans la conduite de fluide de refroidissement (7) menant en particulier du compresseur (11) jusqu'à l'au moins une ouverture d'admission (5).

10. Module de batterie selon l'une quelconque ou plusieurs des revendications précédentes,
**caractérisé en ce que**
le fluide de refroidissement comprimé par le compresseur (11) peut être refroidi, au moyen d'un échangeur de chaleur (13), par le fluide de refroidissement sortant de l'organe de détente (14).

11. Module de batterie selon la revendication 9 ou 10,
**caractérisé en ce que**
l'échangeur de chaleur (13) est disposé sur et/ou dans la conduite de fluide de refroidissement (7) menant du compresseur (11) jusqu'à l'au moins une ouverture d'admission (5).

12. Module de batterie selon l'une quelconque ou plusieurs des revendications précédentes,
**caractérisé en ce**
**qu'**une unité de régulation (12) est associée au module de batterie (1), laquelle unité de régulation commande et/ou régule la pression dans le boîtier (2) et/ou la température de l'au moins une batterie (3).

13. Module de batterie selon l'une quelconque ou plusieurs des revendications précédentes,
**caractérisé en ce que**
l'au moins une batterie (3) est une batterie à ions lithium (4) et/ou le fluide de refroidissement est un gaz, en particulier de l'air.

14. Système de module de batterie (15) comprenant plusieurs modules de batterie (1),
**caractérisé en ce que**
le système de module de batterie (15) comporte au moins un module de batterie (1) selon l'une quelconque ou plusieurs des revendications précédentes.

15. Procédé pour refroidir au moins une batterie (3) disposée dans un boîtier (2), comprenant les étapes consistant à
- comprimer un fluide de refroidissement,
- introduire dans le boîtier (2) le fluide de refroidissement comprimé,
- refroidir l'au moins une batterie (3) à l'aide du fluide de refroidissement comprimé,
- évacuer le fluide de refroidissement comprimé hors du boîtier (2) et
- détendre le fluide de refroidissement, **caractérisé en ce que**
le fluide de refroidissement est refroidi.

16. Procédé selon la revendication 15,
**caractérisé en ce que**
le fluide de refroidissement comprimé est refroidi.

17. Procédé selon la revendication 15 ou 16,
**caractérisé en ce que**
le fluide de refroidissement, de préférence comprimé, est refroidi de telle sorte que la puissance de refroidissement soit accrue, au moyen d'un dispositif de refroidissement (8), en plus de l'effet de refroidissement de toute façon présent dans les conduites de fluide de refroidissement (7) et/ou boîtiers (2).

18. Procédé selon l'une quelconque ou plusieurs des revendications 15 à 17,
**caractérisé en ce que**
le fluide de refroidissement est refroidi avant l'introduction dans le boîtier (2).

19. Procédé selon l'une quelconque ou plusieurs des revendications 15 à 18,
**caractérisé en ce que**
le fluide de refroidissement est guidé, dans une conduite de fluide de refroidissement (7), d'un compresseur (11) jusqu'au boîtier (2), et est refroidi dans la conduite de fluide de refroidissement (7).

20. Procédé selon l'une quelconque ou plusieurs des revendications 15 à 19,
**caractérisé en ce que**
le fluide de refroidissement est refroidi par des ailettes de refroidissement (9) et/ou par une machine frigorifique (10).

21. Procédé selon l'une quelconque ou plusieurs des revendications 15 à 20,
**caractérisé en ce**
**qu'**au moyen d'une unité de régulation (12), la pression dans le boîtier (2) et/ou la température de l'au moins une batterie (3) sont commandées et/ou régulées.

22. Procédé selon la revendication 21,
**caractérisé en ce que**
l'unité de régulation (12) commande et/ou régule la pression dans le boîtier (2) et/ou la température de l'au moins une batterie (3) en fonction de la pression interne dans l'au moins une batterie (3) et/ou de la température du fluide de refroidissement aspiré par le compresseur (11) et/ou de la température du fluide de refroidissement comprimé introduit dans le boîtier (2) et/ou de la température du fluide de refroidissement comprimé introduit dans le boîtier (2) et/ou de la température du fluide de refroidissement évacué hors du boîtier (2) et/ou de la température du fluide de refroidissement après la détente dans l'organe de détente (14).

23. Programme informatique comprenant des moyens de code de programme qui sont enregistrés sur un support de données lisible par ordinateur, afin de mettre en oeuvre un procédé selon l'une quelconque ou plusieurs des revendications 15 à 22 lorsque le programme informatique est exécuté sur un ordinateur ou une unité de calcul correspondante.
